# EUROPEAN PATENT SPECIFICATION

(11) **EP 0 607 675 B1**
(45) Date of publication and mention of the grant of the patent: **25.09.1996**
(21) Application number: 93309905.3
(22) Date of filing: 09.12.1993
(51) Int. Cl.: H01M 6/44, H01M 2/22, H01M 2/10, H01M 2/32, H01M 2/12, H01M 10/50

(54) **Battery with rust preventive structure**
Batterie mit rostschützender Struktur
Batterie comportant une structure pour la prévention de la rouille

(30) Priority: 22.12.1992 JP 87943/92; 16.09.1993 JP 50332/93; 29.10.1993 JP 272231/93
(43) Date of publication of application: 27.07.1994
(73) Proprietor: HONDA GIKEN KOGYO KABUSHIKI KAISHA, Minato-ku Tokyo (JP); SANYO ELECTRIC Co., Ltd., Moriguchi-shi, Osaka 570 (JP)
(72) Inventor: Tamaki, Kenji, Hiki-gun, Saitama (JP); Suzuki, Hiroyuki, Minamisaitama-gun, Saitama (JP); Toriyama, Masayuki, Kawagoe-shi, Saitama (JP); Nakazawa, Yoshihiro, Asaka-shi, Saitama (JP); Nakamori, Masaharu, Asaka-shi, Saitama (JP); Ito, Tsukasa, Sumoto-shi, Hyogo (JP); Takesue, Fumiki, Sumoto-shi, Hyogo (JP); Furuse, Akihiro, Sumoto-shi, Hyogo (JP); Kitaoka, Kazuhiro, Sumoto-shi, Hyogo (JP)
(74) Representative: Hillier, Peter

(56) References cited:
- EP-A- 0 539 269
- DE-A- 3 518 216
- FR-A- 2 168 886
- GB-A- 2 027 978
- GB-A- 2 034 511
- GB-A- 2 136 629
- US-A- 2 355 197
- US-A- 2 416 079
- US-A- 5 079 108
- PATENT ABSTRACTS OF JAPAN vol. 10, no. 186 (E-416)28 June 1986 & JP-A-61 034 856 (MATSUSHITA ELECTRIC IND CO) 19 February 1986
- PATENT ABSTRACTS OF JAPAN vol. 8, no. 277 (E-285)(1714) 18 December 1984 & JP-A-59 146 152 (HITACHI MAXELL K.K.) 21 August 1984
- PATENT ABSTRACTS OF JAPAN vol. 14, no. 380 (E-0965)16 August 1990 & JP-A-02 139 849 (HITACHI MAXELL LTD) 29 May 1990
- PATENT ABSTRACTS OF JAPAN vol. 10, no. 186 (E-416)28 June 1986 & JP-A-61 034 856
- PATENT ABSTRACTS OF JAPAN vol. 8, no. 277 (E-285)(1714) 18 December 1984 & JP-A-59 146 152
- PATENT ABSTRACTS OF JAPAN vol. 14, no. 380 (E-0965)16 August 1990 & JP-A-02 139 849

## Description

### BACKGROUND OF THE INVENTION

This invention relates to batteries with rust preventive structures primarily incorporated in electric powered vehicles or in equipment used where moisture is likely to get on the batteries.

The single battery cell uses an iron case with a nickel plated surface. When moisture adheres to the surface of the metal case, the nickel plating peels off exposing the iron to rust. Battery rusting causes poor electrical contact by increasing contact resistance, and also impedes proper operation of the safety valve. To alleviate these problems, batteries used outdoors have a plurality of battery cells sealed within a moisture tight case.

This structure has the feature that since the battery cells are protected in the moisture tight case, they can be used outdoors with confidence. However, only small capacity batteries can be employed in this structure. This is because the battery cells cannot be effectively air cooled for applications where high currents are extracted. Since batteries used as power supplies for applications such as electric powered vehicles output high currents and correspondingly large amounts of heat, how efficiently that heat can be given off is extremely important. When a battery heats up and its temperature rises, battery performance drops drastically. High current batteries used for applications such as electric powered vehicles have large battery capacities. In order to reduce the charging time of high capacity batteries, charging currents are increased and effective air cooling during charging is also important. Consequently, high current batteries, even those used outdoors, cannot be water proofed by configuring a plurality of battery cells inside a moisture tight case. Therefore, prior art high current batteries have the drawback that effective cooling as well as a water proof structure are difficult to achieve.

A safety valve is provided to prevent a battery's external case from bursting. The safety valve opens when internal pressure rises abnormally. An open safety valve prevents external case rupture by exhausting gases within the battery. Provision of a safety valve makes it difficult to attain a moisture tight seal for the battery. As discussed in Japanese Utility Model Publication No.59-19301 issued June 4, 1984 and Japanese Non-examined Utility Model Publication No. 62-59961 issued April 14, 1987, this is because battery gases cannot be quickly discharged out an opened safety valve .

This invention was developed for the purpose of correcting these and other drawbacks. It is thus a primary object of this invention to provide a battery with rust preventive structure in which battery cells can be effectively air cooled in a moisture resistant configuration without impeding safety valve operation.

### SUMMARY OF THE INVENTION

In the battery with rust preventive structure of this invention the outer circumference side-walls of the battery cells are covered with heat-shrink tubing. The heat-shrink tubing that covers the side-walls also covers the outer edge portion of the battery terminal end with the safety valve. The heat-shrink tubing is cut longer than the total battery cell length so that it extends beyond the terminal ends. The tubing that extends beyond a terminal end is shrunk to form a ring covering the outer edge of the terminal end. This heat-shrink tubing around the outer edge of the safety valve terminal end is attached in a moisture tight fashion to a sealing plate via a pressure separating adhesive layer. The sealing plate has an opening for the battery terminal to pass through. The pressure separating adhesive layer separates when the battery cell safety valve opens and gas pressure is exerted against the sealing plate. When the pressure separating adhesive layer separates, an opening is created for gas to escape between the sealing plate and the heat-shrink tubing. A terminal lead-tab inserts through the battery terminal opening in the sealing plate, and the end of the lead-tab connects with the terminal at the safety valve end of the battery. The area between the lead-tab and the opening in the sealing plate is filled with adhesive bond to prevent moisture ingress. This region of the battery terminal end opposite the safety valve end is also covered in a moisture tight fashion. Since this terminal end has no safety valve, it can be made moisture tight by applying adhesive bond between the lead-tab and the heat-shrink tubing. On the other hand, the area between the lead-tab and the opening in a sealing plate can also be filled with adhesive bond in the same manner as for the safety valve end. However, the sealing plate on the terminal end opposite the safety valve is attached to the heat-shrink tubing without a pressure separating adhesive layer but rather with adhesive bond that does not separate even with pressure applied.

### BRIEF DESCRIPTION OF THE DRAWINGS

Fig. 1 is a cross-sectional view showing a concrete example of a battery with rust preventive structure in an embodiment of this invention.

Fig. 2 is an oblique view of the battery with rust preventive structure shown in Fig. 1.

Fig. 3 is an exploded oblique view of the + terminal region of the battery with rust preventive structure shown in Fig. 1.

Fig. 4 is a cross-sectional view of a battery cell with a safety valve built-in.

Fig. 5 is an oblique view showing a concrete example of a battery pack with a plurality of batteries connected together.

Fig. 6 is a plan view of the battery pack shown in Fig. 5.

Fig. 7 is a plan view an alternative lead-tab configuration.

Fig. 8 is a side view and a plan view showing tubular covering attached to the lead-tab of Fig. 7.

Fig. 9 is an enlarged cross-sectional view of the lead-tab.

Fig. 10 is an enlarged cross-sectional view of important parts of the + terminal of a battery with the lead-tab shown in Fig. 7 connected.

Fig. 11 is a cross-section viewed perpendicular to the direction of the cross-section of Fig. 10.

Fig. 12 is an enlarged cross-sectional view of important parts of the - terminal of a battery with the lead-tab shown in Fig. 7 connected.

Fig. 13 is a cross-section viewed perpendicular to the direction of the cross-section of Fig. 12.

Fig. 14 is a plan view of a casing for the batteries shown in Figs. 10 through 13.

### DETAILED DESCRIPTION OF THE INVENTION

The outer circumference side-walls and safety valve terminal end of a cell of the battery with rust preventive structure of the present invention are covered in a moisture tight fashion by heat-shrink tubing, a sealing plate, and adhesive bond. For this reason, a battery cell can have a moisture tight structure that also allows effective air cooling. Further, since the sealing plate covering the safety valve terminal end is attached to the heat-shrink tubing via a pressure separating adhesive layer, gas passing through an open safety valve can escape to the outside when gas pressure is applied to the sealing plate separating it from the heat-shrink tubing.

A preferred configuration of the battery of the present invention is also provided with the following structure. The battery has lead-tabs covered with tubular covering. The tubular covering does not cover an entire lead-tab. The ends of a lead-tab project out from the tubular covering. The ends of a lead-tab that project out from the tubular covering have adhesive bond insertion holes. The adhesive bond insertion holes are positioned next to welding areas of the lead-tab where the lead-tab is welded to a battery terminal. Adhesive bond can be injected through an insertion hole of a lead-tab to plug the area around the surface of the lead-tab. Adhesive bond applied to the end of a lead-tab provides a moisture tight coating for the area of lead-tab surface that projects out from the tubular covering.

Clad material can be used for the lead-tab of a battery. The clad material can be a laminate of copper with layers of metal of lower electrical conductivity than copper such as nickel. Further, the ends of the lead-tab of a battery of the present invention are bent at an obtuse angle ( α ) to form the welding areas. This bend protects the lead-tab from damage due to vibration.

The following describes an embodiment of the present invention based on the figures.

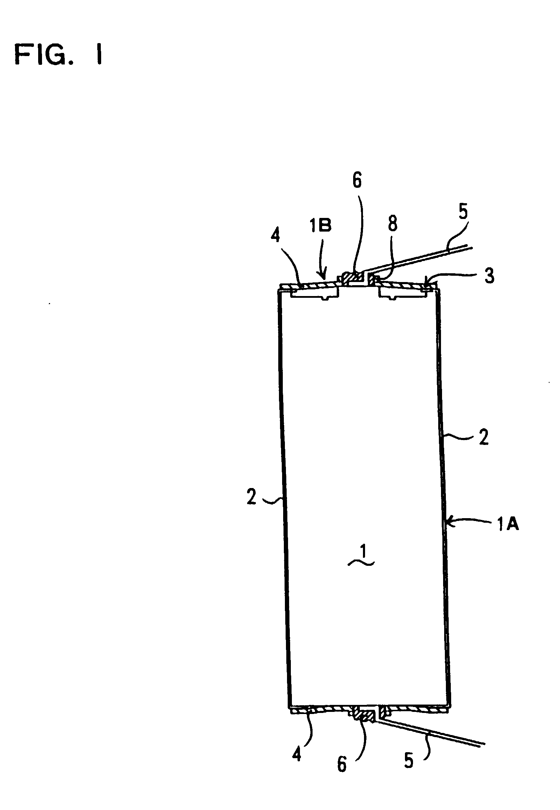

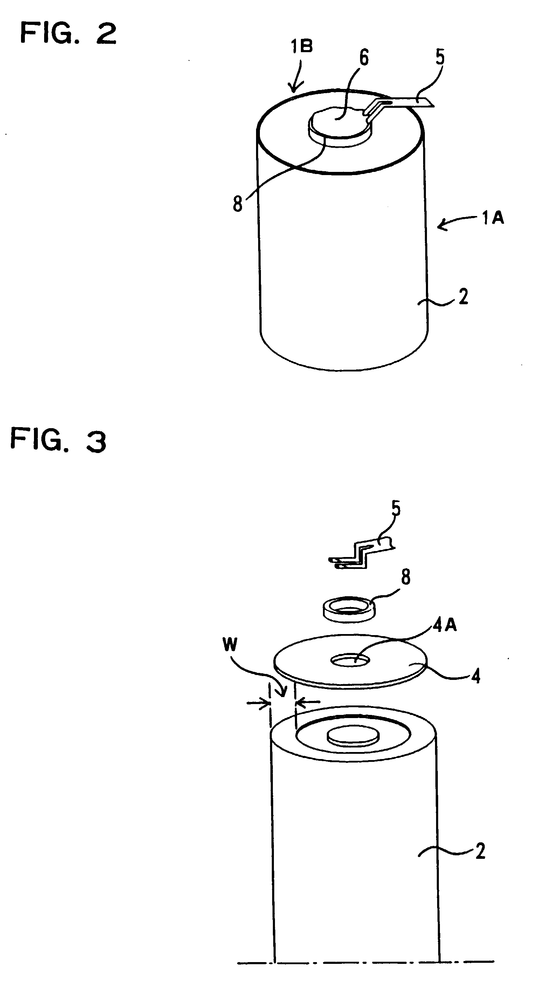

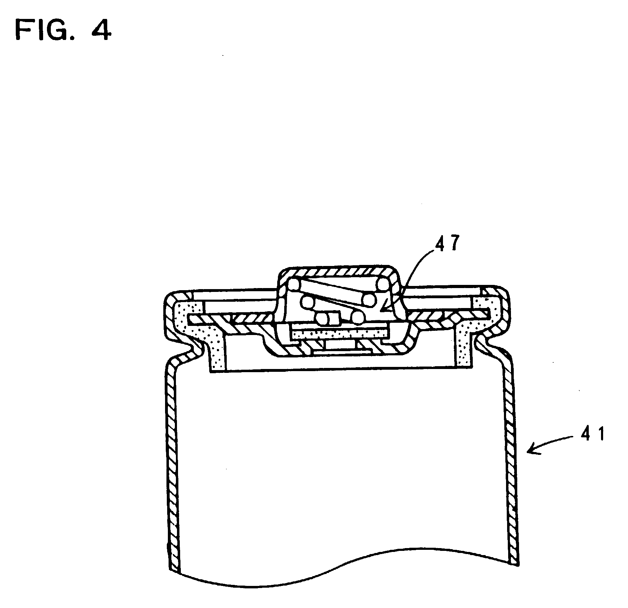

The outer circumference side-wall 1A of the battery cell 1 of the battery with rust preventive structure shown in the cross-section of Fig. 1, the oblique view of Fig. 2, and the exploded oblique view of Fig. 3 are covered with heat-shrink tubing 2. The battery cell of these and other figures is cylindrical in shape. However, the present invention does not restrict the shape of the battery cell to a circular cylinder. For example, the battery cell may also be shaped as a rectangular column or an elliptical column. As shown in Fig. 4, the battery cell has a built-in safety valve 47. The safety valve 47 opens when gas pressure within the battery rises abnormally. The safety valve 47 shown in Fig. 4 is built-in to the + terminal end of the battery cell 41.

The heat-shrink tubing 2 covering the outer circumference side-wall 1A of the battery cell 1 shown in Figs. 1 through 3 is a synthetic resin film that shrinks when heated. In its un-shrunk state, the heat-shrink tubing 2 is shaped as a cylinder that is wider around than the battery cell 1. A battery cell 1 is inserted into the cylindrical heat-shrink tubing 2, and the tubing is heated and shrunk to adhere tightly to the outer circumference side-wall 1A of the battery cell 1. As shown in Figs. 1 and 3, the heat-shrink tubing 2 covers not only the battery cell side-wall 1A but also the outer edge regions of the battery terminal end 1B. The width (W) of the heat-shrink tubing 2 covering the outer edge region of the terminal end 1B is set between 2mm and 20mm and preferably between 3mm and 10mm in order to attach the sealing plate 4. The width (W) of heat-shrink tubing 2 covering the edge region of the end 1B can be set by the adjusting the overall length of the heat-shrink tubing 2. The width (W) of heat-shrink tubing 2 covering the end 1B is widened by increasing the overall length of the heat-shrink tubing 2 beyond the overall length of the battery cell 1. Since the heat-shrink tubing 2 shrinks when heated, it adheres tightly to the outer edge region of the terminal end 1B as shown in Fig. 3. The heat-shrink tubing 2 bends through a 90 ° angle between the battery cell side-wall 1A and the terminal end 1B tightly adhering to the surface of the battery cell 1.

The battery has a sealing plate 4 attached to the outer edge region of the battery terminal end 1B. The sealing plate 4 is made from insulating sheet material that moisture does not penetrate such as plastic. The sealing plate 4 is formed to essentially the same shape as the battery cell terminal end 1B in order to close it off. A battery terminal hole 4A is provided at the center of the sealing plate 4 to allow a lead-tab 5 to pass through. A ring 8 is attached in a moisture tight fashion to the sealing plate 4 at the terminal hole 4A. The ring 8 prevents leakage of adhesive bond 6 applied in the vacancy at the terminal hole 4A with the lead-tab 5 inserted. A sealing plate 4 with a ring 8 allows a reliable moisture tight seal between the lead-tab 5 and the sealing plate 4 with a small amount of adhesive bond 6. This also gives the battery terminal 1B a good finished appearance. The sealing plate 4 is attached to the surface of the heat-shrink tubing 2 covering the outer edge region of the terminal end 1B via the pressure separating adhesive layer 3.

The pressure separating adhesive layer 3 causes at least a portion of the sealing plate 4 to separate from the heat-shrink tubing 2 when the battery cell's safety valve opens. The safety valve built-in to a nickel-cadmium battery is designed to open when internal pressure rises to about 20Kg/cm². Consequently, the pressure separating adhesive layer 3 is designed to a strength that will separate when the sealing plate 4 is pushed on by gas discharged from the battery case through an open safety valve. For example, double sided tape with adhesive applied on both surfaces can be used as the pressure separating adhesive layer 3. The sealing plate 4 can be easily attached to the heat-shrink tubing 2 when double sided tape is used. Adhesive bond can also be used for the pressure separating adhesive layer instead of double sided tape. To attach the sealing plate to the heat-shrink tubing, adhesive bond can be applied to either the surface of the sealing plate or the heat-shrink tubing or both. Further, instead of adhesive bond, the pressure separating adhesive layer can use any type of bond that allows separation of the sealing plate from the heat-shrink tubing when the sealing plate is pushed on by gas pressure from an open safety valve.

When the safety valve opens, the pressure separating adhesive layer 3 causes the sealing plate 4 to separate from the heat-shrink tubing 2. Consequently, it is necessary for the sealing plate 4 at the safety valve terminal end 1B to be attached to the heat-shrink tubing 2 via a pressure separating adhesive layer 3. The reason for this is because gas which passes through the safety valve into the battery terminal must be exhausted between the sealing plate 4 and the heat-shrink tubing 2.

After the sealing plate 4 is attached to the heat-shrink tubing 2 on the terminal end 1B, a lead-tab 5 is connected by spot welding it to the terminal of the battery cell 1. The end of the lead-tab 5 passes through the sealing plate 4 that defines the terminal end 1B plane and connects with the terminal of the battery cell 1. The lead-tab 5 is made of sheet metal and is bent as shown in Fig. 3 for easy passage through the ring 8 of the sealing plate 4.

After the lead-tab 5 is connected to the battery terminal, the vacancy between the lead-tab 5 and the terminal hole 4A is plugged with adhesive bond. Adhesive bond is applied within the ring 8 to make a moisture tight seal between the lead-tab 5 and the terminal hole 4A. Bonds such as those in the epoxy, urethane, phenol, and acrylic families can be used as the adhesive bond 6.

The battery with rust preventive structure shown in Fig. 1 has both the + and - terminals sealed against moisture by the same structure. It is necessary to attach the sealing plate 4 of the safety valve terminal end 1B to the heat-shrink tubing 2 via a pressure separating adhesive layer 3. This is because internal battery gas from an open safety valve must be exhausted between the sealing plate 4 and the heat-shrink tubing 2. However, the battery terminal end without a built-in safety valve (normally the - terminal end) can have an intrinsically moisture tight structure. In other words, at this terminal end there is no demand for the ability to release gas that builds up pressure within the battery. Consequently, there is no requirement to attach the sealing plate 4 at this terminal end plane to the heat-shrink tubing via a pressure separating adhesive layer. Rather, the sealing plate 4 at the terminal end with no safety valve can be attached to the heat-shrink tubing via a robust adhesive bond that does not separate due to internal gas pressure. Further, although not illustrated, the area of this terminal end plane covered by heat-shrink tubing can be widened and the gap between the lead-tab and the heat-shrink tubing can be sealed against moisture by adhesive bond without using a sealing plate.

A high capacity battery sealed in this type of moisture tight structure is seldom used as a single unit. More often a plurality of battery cells are used as a battery pack by connecting them in series to establish the proper output voltage or in parallel to further increase the battery capacity. By connecting a plurality of batteries together in this fashion, the battery pack can be made to have a capacity and voltage optimally suited for applications such as electric powered vehicles.

When this is done, it is important to connect the battery cells together in a configuration that allows effective cooling. In particular, the total quantity of heat generated by a battery pack with many high capacity battery cells is large, and effective cooling to prevent temperature rise as much as possible is extremely important. It is also important to make a battery pack that uses large battery cells compact enough to fit within a limited space. Compactness and effective heat dissipation are mutually opposing characteristics that are very difficult to realize simultaneously. When a battery pack is assembled in a compact fashion, heat dissipation is difficult, battery temperature rises, and reduction in battery performance due to temperature rise becomes a problem.

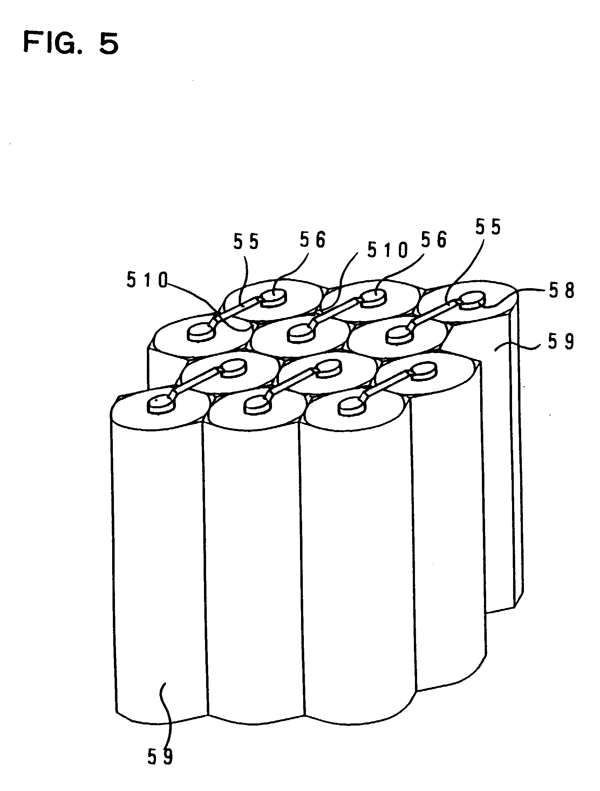

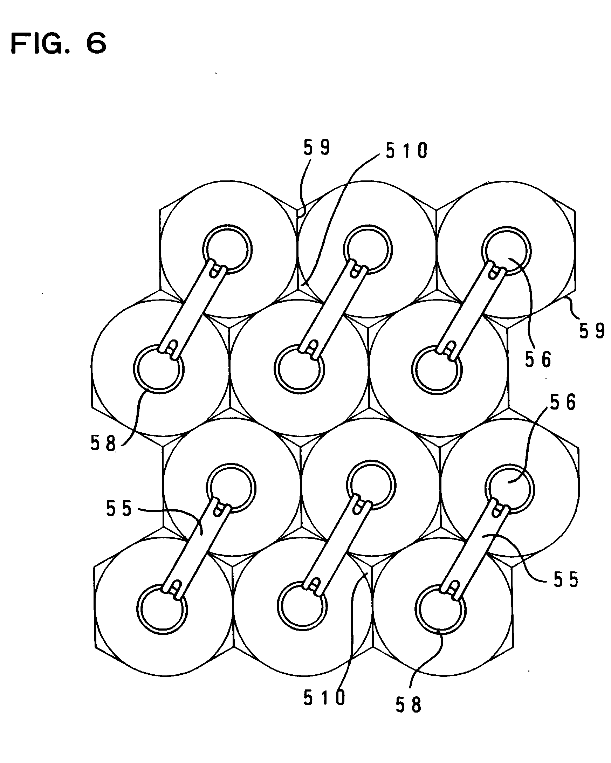

Figs. 5 and 6 show an improved battery pack that can effectively dissipate heat and has an overall compact shape. This battery pack connects batteries together using a honeycomb core 59 that creates air cooling ducts 510 between each set of adjacent batteries. Both ends of the honeycomb core 59 are open to allow air to flow freely through the air cooling ducts 510 of the battery pack. Batteries with rust preventive structure are inserted into the hexagonal cylinders of the honeycomb core 59 forming air cooling ducts 510 between adjacent batteries.

Sheet material with flexibility to deform and some elasticity to expand and contract is used for the honeycomb core 59. The honeycomb core 59 is made slightly small to allow for some expansion when the batteries are inserted. As shown in Fig. 6, when batteries are inserted into the honeycomb core's hexagonal cylinders, air cooling ducts 510 of identical shape are created between each set of adjacent batteries.

The air cooling ducts 510 pass vertically through the battery pack allowing air to pass freely. Consequently, cooling air easily flows through the air cooling ducts 510 to effectively and uniformly cool the surface of each battery. In particular, the honeycomb core 59 does not closely attach to the battery surfaces within the air cooling ducts 510 and uniform forced cooling of those battery surfaces is accomplished by air flowing through the air cooling ducts 510. Since the honeycomb core 59 does not cover the battery surfaces within the air cooling ducts 510, battery surfaces within the air cooling ducts 510 are in direct contact with the air and are cooled without intervention of the honeycomb core 59. Cooling ducts 510 are formed within the interior of the battery pack. Temperature can easily rise at the interior of the battery pack since it is difficult to dissipate heat there. Identically shaped air cooling ducts 510 are formed between each set of batteries in a battery pack using a honeycomb core 59. Except for the area of each battery that contacts its neighbors, a relatively large battery surface area is positioned within the air cooling ducts 510. Consequently, a battery pack held together by a honeycomb core has the feature that many batteries can be cooled very effectively by passing cooling air through the ducts 510. Further, since the honeycomb core 59 can neatly arrange the batteries in fixed positions, a compact overall shape can be obtained.

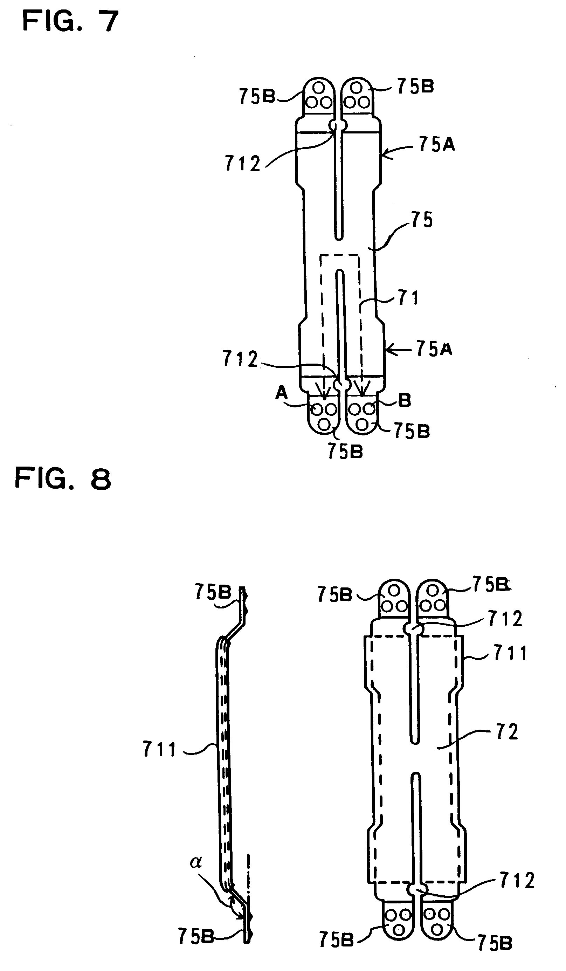

The lead-tab that connects battery cell terminals together can also be shaped as shown in Fig. 7. Both ends of the lead-tab 75 shown in this figure are divided in two. As shown in the side view of Fig. 8, the divided part of the lead-tab 75A is made to pass through the hole in the battery terminal sealing plate and weld to the battery terminal by bending the end of lead-tab 75 at an obtuse angle ( α ) to form a welding region 75B. The edge of the welding region 75B of the lead-tab 75 shown in this figure is bent, and the inside of the lead-tab 75 is bent again at an obtuse angle. Bending the ends of the lead-tab 75 at two points in this fashion allows the center portion of the lead-tab 75 to take a straight line shape. However, although not illustrated, it is not always necessary to bend the lead-tab in two places next to the welding region 75B. For example, it is also possible to bend the edge of the welding region 75B in an obtuse angle, then bend the entire lead-tab in a slightly curved arch to weld both ends to battery terminals. The welding region 75B provided by bending each end of the lead-tab 75 is spot welded to a + or - terminal of a battery.

A lead-tab 75 with divided ends has the characteristic that it can be efficiently spot welded. This is because when points A and B shown in Fig. 7 touch the terminal during spot welding, parasitic current I flowing through the circuit shown by a broken line is reduced and large current can flow between the welding region 75B and the battery cell terminal.

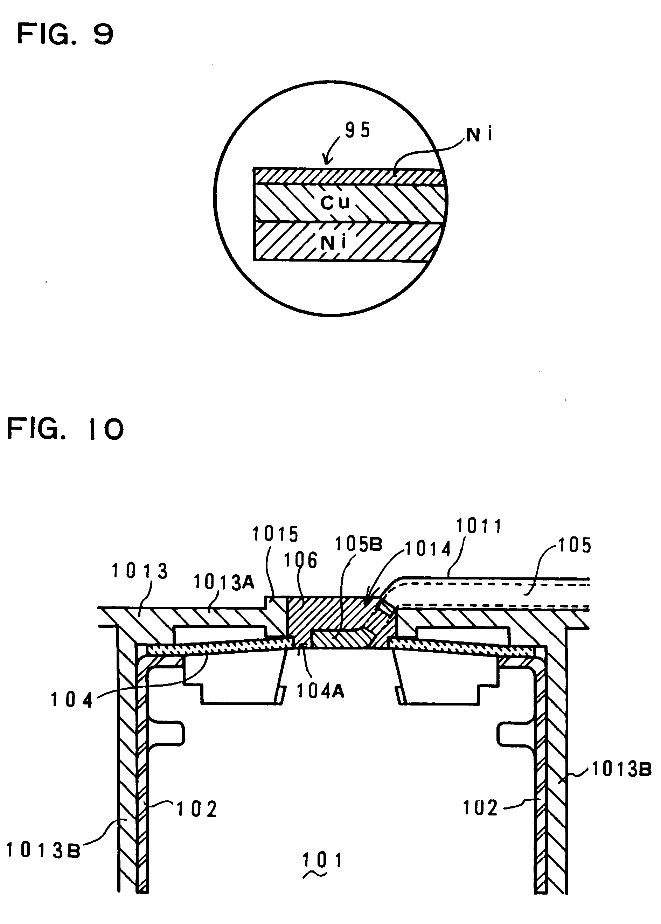

Further, clad material that is a laminate of different metals can be used for the lead-tab 75 to reduce parasitic currents during spot welding. The clad material is copper with a metal of lower conductivity plated over the surface of the copper. Fig. 9 shows an enlarged cross-sectional view of an optimum clad material for the lead-tab 95. The clad material in this figure has layers of nickel as the low conductivity metal laminated on both surfaces of copper. Nickel and copper are joined together by forming alloys at the interfaces. The clad material in this figure has the side with the thick nickel layer welded to the battery terminal. The thick nickel layer that is welded to the terminal is designed, for example, to be 0.1mm to 0.25mm thick and the thin layer on the opposite side is designed, for example, to be 0.02mm to 0.1mm thick. The center layer of copper is designed, for example, to be 0.1mm to 0.4mm thick. For a lead-tab carrying several tens of amperes of current, a copper thickness of 0.2mm, a thick nickel welding side thickness of 0.2mm, and a thin nickel side thickness of 0.05mm is desirable. The lead-tab 95 made of clad material with the cross-sectional structure of Fig. 9 can be spot welded to make the center copper form alloys. When the lead-tab is spot welded, heat from welding fuses the nickel layer to form alloys and weld copper to the battery terminal.

The lead-tab 75 of Fig. 7 is also provided with adhesive bond insertion holes 712 between the bent portions of the lead-tab ends. The purpose of an adhesive bond insertion hole 712 is for injecting adhesive bond to the back side of the lead-tab 75. Without an adhesive bond insertion hole 712, application of adhesive bond to the back side of a lead-tab 75 spot welded to a battery terminal cannot be verified. As shown in Fig. 10, it is necessary to inject adhesive bond into the back side of the lead-tab 105 without voiding. This is to completely cover the surface of the lead-tab 105 and shut out air. It is a laborious process to fill the backside of the lead-tab 105 with adhesive bond without creating voids when an adhesive bond insertion hole is not provided. It is also difficult to determine whether or not voids have been filled. Adhesive bond is injected to the back side of the lead-tab 105 through an adhesive bond insertion hole 1012. After injected adhesive bond has filled all voids on the back side of the lead-tab 105 it leaks out from both sides to cover the lead-tab 105. In other words, when adhesive bond leaks out from the back side of the lead-tab 105, the back side of the lead-tab 105 has been filled without voids.

The adhesive bond insertion hole 712 is disposed between the bends in the lead-tab 75 shown in Fig. 7. This configuration has the feature that the strength of the bent portions of the lead-tab 75 is not reduced by the adhesive bond insertion hole 712. The bent portions of the lead-tab 75 are easily damaged by vibration. The strength of the bent portions with respect to vibration is also increased by making the angle ( α ) an obtuse angle as shown in Fig. 8. A lead-tab with right angle bends has large stress built up in the bent portions that reduce strength with respect to vibration. The lead-tab 75 bent at obtuse angles as shown in Fig. 8 has little internal stress and is strong with respect to vibration.

Further, the lead-tab 75 shown in Fig. 8 is covered by tubular covering 711. The tubular covering 711 covers the central portion of the lead-tab 75. Portions of the lead-tab 75 not covered by tubular covering 711 are covered by adhesive bond. The entire surface of the lead-tab 75 is covered in a completely moisture tight fashion by tubular covering 711 and adhesive bond. Although any tubing that shuts out outside air from the lead-tab 75 can be used as the tubular covering 711, heat shrink tubing is most suitable. The lead-tab 75 is inserted into heat shrink tubing, then heat is applied to tightly attach the heat-shrink tubing to the surface of the lead-tab 75. The lead-tab 75 shown in Fig. 8 has part of its bent regions covered, but the region of the adhesive bond insertion holes is not covered.

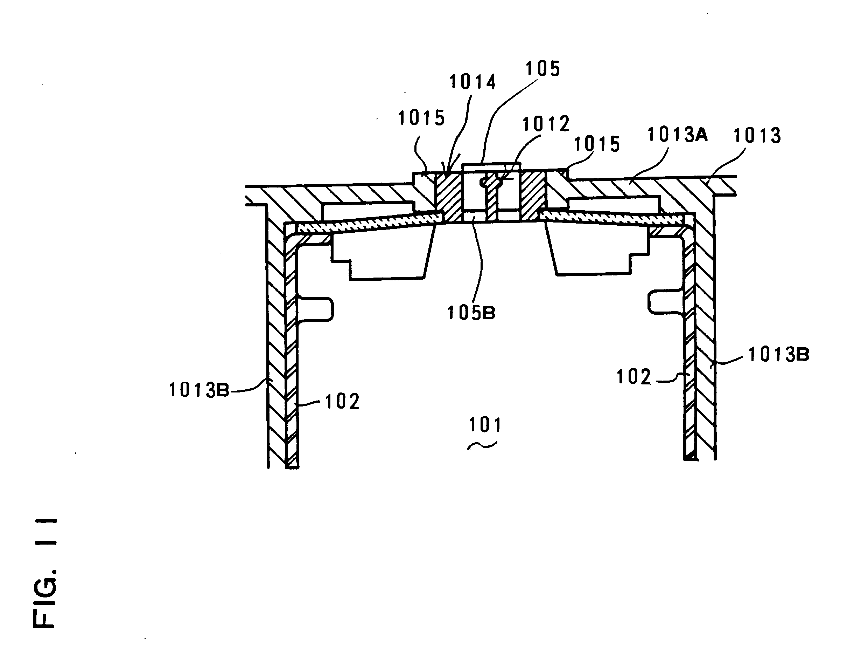

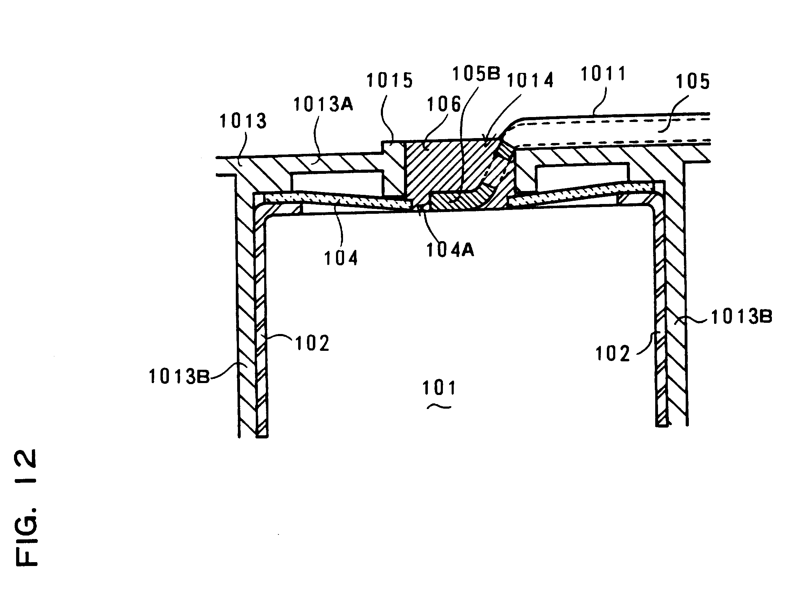

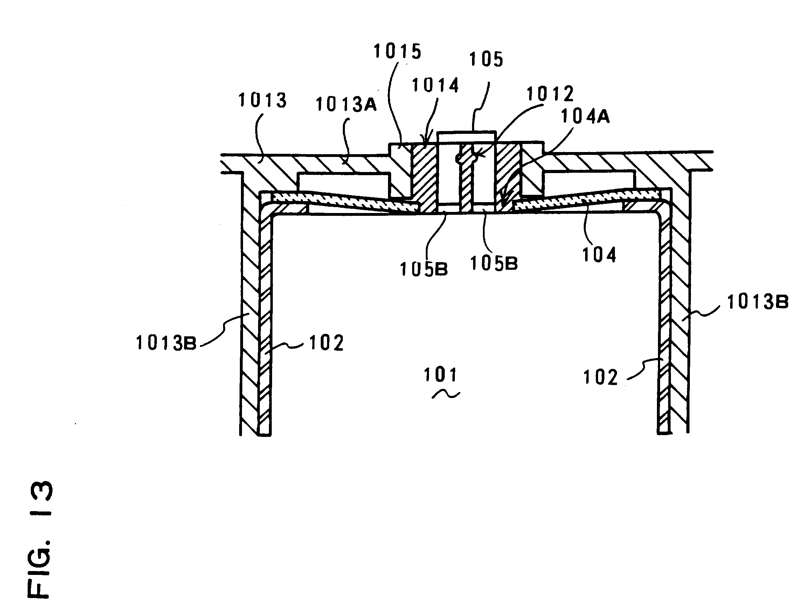

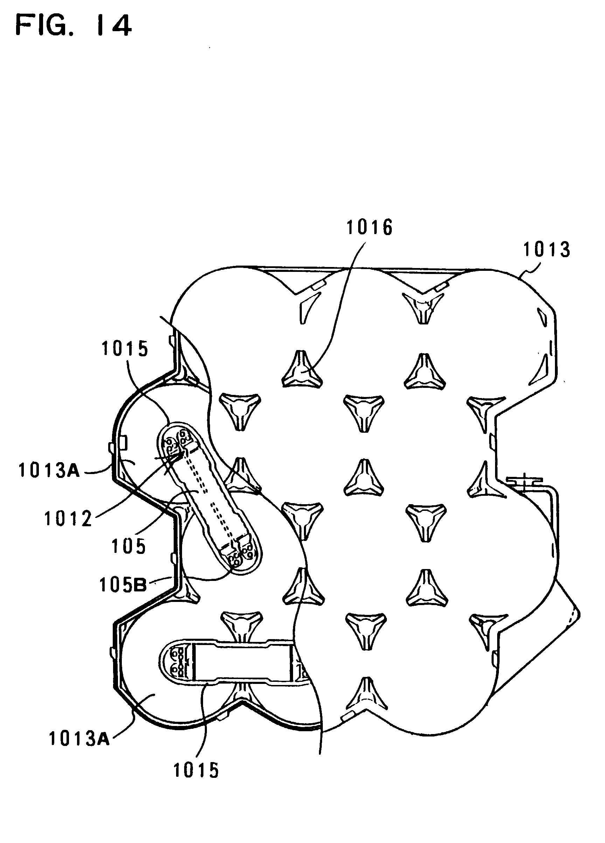

Figs. 10 and 11 show the structure of the + terminal region of the battery cell where the lead-tab 75 shown in Fig. 8 is spot welded, and Figs. 12 and 13 show the structure of the - terminal. Figs. 10 and 12 are cross-sectional views cut through the direction of the lead-tab, and Figs. 11 and 13 are cross-sectional views cut through a perpendicular direction. In these and other figures, a casing 1013 is disposed above the sealing plate 104. A plan view of the casing 1013 is shown in Fig. 14. The casing 1013 shown in this figure is a formed plastic shape connecting 12 disks 1013A in a manner creating openings. The disks 1013A are circular shaped and slightly larger than the outside diameter of a battery cell. Cylinders 1013B for battery cell insertion are formed as a single piece on the under side of the disks 1013A. The bases of the cylinders 1013B are open to allow battery cell insertion.

The centers of the disks 1013A of the casing 1013 are provided with adhesive bond filling holes 1014. The perimeters of the adhesive bond filling holes 1014 are provided with guide walls 1015. However, the guide walls 1015 are only provided in regions not under the lead-tab 105. Guide walls 1015 extend to the adhesive bond filling hole 1014 of an adjacent disk 1013A to hold the lead-tab 105 in place. A casing 1013 with guide walls 1015 not only aligns the lead-tabs 105, but also prevents the lead-tabs 105 from moving out of position.

The casing 1013 is disposed at both ends of the battery cells 101 to connect 12 battery cells 101 together in fixed positions. Connecting rods 1016 are formed as a single unit within the vacancies between disks 1013A to connect the casing 1013 together. The cylinders 1013B of the casing 1013 with sealing plate 104 attached battery cells 101 inserted are thereby connected together.

The bent region of the lead-tab 105 inserts through the adhesive bond filling hole 1014 of the casing 1013 and the battery terminal hole 104A of the sealing plate 104, and the welding region 105B is spot welded to the + terminal of the battery cell. The end of the lead-tab 105 which is not covered by tubular covering 1011 is covered by adhesive bond 106 applied in the adhesive bond filling hole 1014 and the battery terminal hole 104A. Adhesive bond on the under side of the lead-tab 105 is injected through the adhesive bond insertion hole 1012. Adhesive bond 106 is also applied to the upper surface of the lead-tab 105. The adhesive bond filling hole 1014 and the battery terminal hole 104A are filled with adhesive bond 106 to cover the entire portion of the lead-tab 105 protruding from the tubular covering 1011.

The battery shown in Fig. 1 has both the + and - terminal ends sealed with the same structure. The + end of this battery is provided with a safety valve. For this reason the - end with no safety valve does not necessarily require attachment of a sealing plate via a pressure separating adhesive layer. The sealing plate at the - end can be attached via adhesive that will not separate even if pressure acts on it. However, a structure with the sealing plate attached to both the + and - terminal ends via a pressure separating adhesive layer has the feature that manufacture in large quantities can be done efficiently because the same structure is used at both ends of the battery.

As described above, by covering each battery cell with heat-shrink tubing, sealing plates, and adhesive bond, each battery cell has a structure that prevents moisture ingress. This allows cooling of the battery cell surface with outside air, and in this configuration which allows direct cooling by outside air, the battery cell is protected against moisture contact. A battery protected against moisture with each individual battery cell in a configuration that allows direct air cooling can be very efficiently cooled compared with prior art batteries having a plurality of battery cells tightly sealed together within a case. This is because the actual air cooling area per unit battery capacity is substantial, and because the surface of a battery cell can be directly air cooled. The battery of this invention, which has a waterproof structure and can be efficiently air cooled, has the feature that it can be discharged or charged with large current while suppressing temperature rise and preventing performance degradation due to temperature rise. Further, since each individual battery cell has a waterproof structure, corrosion due to moisture ingress to the battery is drastically reduced.

Still further, the battery with the previously described structure has the feature that even though the battery cells are completely covered in a waterproof configuration, internal battery gas can be exhausted when the safety valve opens. The reason for this is as follows. The battery of the present invention has heat-shrink tubing that covers the side-wall of the battery cell and extends over the outer edge region of the safety valve terminal end plane. A sealing plate is attached to the surface of heat-shrink tubing on the outer edge of the safety valve terminal end via a pressure separating adhesive layer. When the safety valve opens and gas pressure between the battery cell and the sealing plate builds up, the pressure separating adhesive layer separates creating an opening between the sealing plate and the heat-shrink tubing through which gas within the battery terminal can escape. Consequently, the present invention has the feature that waterproof battery cells, that can be effectively air cooled, are made waterproof without impeding the operation of the safety valve.

## Claims

1. A battery with rust preventive structure comprising:
(a) battery cells;
(b) heat-shrink tubing that covers the outer circumference side-wall and the outer edge region of the safety valve terminal end of a battery cell;
(c) a sealing plate that attaches in a moisture tight fashion via a pressure separating adhesive layer to the heat-shrink tubing covering the outer edge region of the safety valve terminal end, and the sealing plate itself is provided with a battery terminal hole;
(d) a lead-tab that passes through the sealing plate's battery terminal hole and its end connects to the safety valve end battery terminal; and
(e) adhesive bond that is applied in a moisture tight fashion in the vacancy between the sealing plate's battery terminal hole and the lead-tab.

2. A battery with rust preventive structure as recited in claim 1 wherein the pressure separating adhesive layer is double sided adhesive tape.

3. A battery with rust preventive structure as recited in claim 1 wherein the pressure separating adhesive layer is adhesive bond.

4. A battery with rust preventive structure as recited in claim 1 wherein the sealing plate is plastic plate material.

5. A battery with rust preventive structure as recited in claim 1 wherein a ring is attached to the sealing plate at the battery terminal hole.

6. A battery with rust preventive structure as recited in claim 1 wherein:
(a) the lead-tab is covered with tubular covering;
(b) an adhesive bond insertion hole is provided in the end region of the lead-tab that protrudes from the tubular covering;
(c) the adhesive bond insertion hole is positioned near the welding region of the lead-tab that is welded to the battery terminal; and
(d) the surface of the lead-tab that protrudes from the tubular covering is covered in a moisture tight fashion by adhesive bond.

7. A battery with rust preventive structure as recited in claim 1 wherein the lead-tab is a clad material of copper laminated with a metal of lower electrical conductivity than copper.

8. A battery with rust preventive structure as recited in claim 7 wherein the metal of lower electrical conductivity than copper is nickel.

9. A battery with rust preventive structure as recited in claim 1 wherein the end region of the lead-tab is bent to provide a welding region, and the bending angle of the welding region is an obtuse angle.

10. A battery with rust preventive structure as recited in claim 1 wherein an adhesive bond insertion hole is provided in the bent region of the lead-tab.

11. A battery with rust preventive structure as recited in claim 1 wherein the end region of the lead-tab is divided in two, and the end region is spot welded to the battery terminal.

12. A battery with rust preventive structure as recited in claim 1 wherein a plurality of battery cells are connected together via a honeycomb core in a fashion creating air cooling ducts between the battery cells.

13. A battery with rust preventive structure as recited in claim 12 wherein the honeycomb core is configured as connected hexagonical cylinders.

14. A battery with rust preventive structure as recited in claim 12 wherein the honeycomb core is sheet material with plasticity and elasticity to allow it to deform.

15. A battery with rust preventive structure as recited in claim 1 wherein a plastic casing is disposed above the sealing plates, and this casing has the form of disks larger than the outer diameter of a battery cell connected together in a manner creating gaps.

16. A battery with rust preventive structure as recited in claim 15 wherein the center of the casing disks have adhesive bond filling holes, and these adhesive bond filling holes are provided with guide walls around their edge.

17. A battery with rust preventive structure as recited in claim 15 wherein the plastic casing has connecting rods formed as a single piece in the gaps between disks, and the casing disposed at both ends of the battery cells is connected together via the connecting rods.

18. A battery with rust preventive structure as recited in claim 15 wherein adhesive bond that is applied in a moisture tight fashion in the vacancy between the sealing plate's battery terminal hole and the lead-tab also fills the adhesive bond filling hole in the disk of the casing.

## Patentansprüche

1. Ein Batterie in rostverhindernder Bauweise, die folgende Elemente aufweist:
(a) Batteriezellen;
(b) einen Aufschrumpf-Schlauch, der die Seitenwand des äußeren Umfangs und den äußeren Randabschnitt der Sicherheitsventil-Klemmenseite einer Batteriezelle bedeckt;
(c) eine Dichtungsplatte, die auf feuchtigkeitsdichte Weise mittels einer sich durch Druck ablösenden Klebeschicht an der Aufschrumpf-Schlauch befestigt ist, die den äußeren Randabschnitt der Sicherheitsventil-Klemmenseite bedeckt, und wobei die Dichtungsplatte selbst mit einer Batterieklemmen-Öffnung versehen ist;
(d) eine Zuleitungsleiste, die durch die Batterieklemmen-Öffnung der Dichtungsplatte führt, und deren Ende mit der Batterieklemme auf der Seite des Sicherheitsventils verbunden ist; und
(e) ein Klebemittel, das in feuchtigkeitsdichter Weise in dem Hohlraum zwischen der Batterieklemmen-Öffnung der Dichtungsplatte und der Zuleitungsleiste eingebracht wird.

2. Eine Batterie in rostverhindernder Bauweise nach Anspruch 1, bei der die sich durch Druck ablösende Klebeschicht ein doppelseitiges Klebeband ist.

3. Eine Batterie in rostverhindernder Bauweise nach Anspruch 1, bei der die sich durch Druck ablösende Klebeschicht ein Klebemittel ist.

4. Eine Batterie in rostverhindernder Bauweise nach Anspruch 1, bei der die Dichtungsplatte ein Plattenplastmaterial ist.

5. Eine Batterie in rostverhindernder Bauweise nach Anspruch 1, bei der an der Batterieklemmen-Öffnung an der Dichtungsplatte ein Ring angebracht wird.

6. Eine Batterie in rostverhindernder Bauweise nach Anspruch 1, bei der
(a) die Zuleitungsleiste mit einer schlauchförmigen Umhüllung bedeckt ist;
(b) in dem Endbereich der Zuleitungsleiste, die aus der schlauchförmigen Umhüllung vorsteht, ein Klebemittel-Einführungsloch geschaffen wird:
(c) das Klebemittel-Einführungsloch sich nahe des Schweißabschnitts der Zuleitungsleiste befindet, die mit der Batterieklemme verschweißt wird; und
(d) die Oberfläche der Zuleitungsleiste, die aus der schlauchförmigen Umhüllung vorsteht, auf feuchtigkeitsdichte Weise durch Klebemittel bedeckt wird.

7. Eine Batterie in rostverhindernder Bauweise nach Anspruch 1, bei der die Zuleitungsleiste ein Verbundwerkstoff aus Kupfer ist, der mit einem Metall von geringerer elektrischer Leitfähigkeit als Kupfer laminiert worden ist.

8. Eine Batterie in rostverhindernder Bauweise nach Anspruch 7, bei der das Metall mit der geringeren elektrischen Leitfähigkeit als Kupfer Nickel ist.

9. Eine Batterie in rostverhindernder Bauweise nach Anspruch 1, bei welcher der Endbereich der Zuleitungsleiste gebogen wird, um einen Schweißabschnitt zu bilden, und der Biegungswinkel des Schweißabschnitts ein stumpfer Winkel ist.

10. Eine Batterie in rostverhindernder Bauweise nach Anspruch 1, bei der in dem gebogenen Bereich der Zuleitungsleiste ein Klebemittel-Einführungsloch vorhanden ist.

11. Eine Batterie in rostverhindernder Bauweise nach Anspruch 1, bei welcher der Endbereich der Zuleitungsleiste in zwei Teile geteilt ist und der Endbereich an die Batterieklemme punktgeschweißt wird.

12. Eine Batterie in rostverhindernder Bauweise nach Anspruch 1, bei der eine Vielzahl von Batteriezellen durch einen Wabenkern auf eine solche Weise miteinander verbunden wird, daß zwischen den Batteriezellen Kühlluft-Kanäle gebildet werden.

13. Eine Batterie in rostverhindernder Bauweise nach Anspruch 12, bei welcher der Wabenkern in Form von verbundenen Sechskant-Zylindern konfiguriert ist.

14. Eine Batterie in rostverhindernder Bauweise nach Anspruch 12, bei welcher der Wabenkern Folienmaterial mit Plastizität und Elastizität ist. um dessen Verformung zu ermöglichen.

15. Eine Batterie in rostverhindernder Bauweise nach Anspruch 1, bei der über den Dichtungsplatten ein Plastgehäuse angeordnet ist, und dieses Gehäuse die Form von Scheiben hat, die größer als der Außendurchmesser einer Batteriezelle sind und die so untereinander verbunden sind, daß Lücken gebildet werden.

16. Eine Batterie in rostverhindernder Bauweise nach Anspruch 15, bei der sich in der Mitte der Gehäusescheiben Klebemittel-Einfüllöcher befinden und diese Klebemittel-Einfüllöcher um ihren Rand mit Führungswänden versehen sind.

17. Eine Batterie in rostverhindernder Bauweise nach Anspruch 15, bei der das Plastgehäuse Verbindungsstäbe hat, die als ein Einzelstück in den Lücken zwischen den Scheiben gebildet werden, und das Gehäuse, das an beiden Enden der Batteriezellen angeordnet ist, miteinander durch die Verbindungstäbe verbunden wird.

18. Eine Batterie in rostverhindernder Bauweise nach Anspruch 15, bei der das Klebemittel, das auf feuchtigkeitsdichte Weise in den Hohlraum zwischen der Batterieklemmen-Öffnung der Dichtungsplatte und der Zuleitungsleiste aufgebracht wird, auch das Klebemittel-Einfülloch in der Scheibe des Gehäuses füllt.

## Revendications

1. Batterie comportant une structure de prévention de la rouille comprenant:
(a) des éléments de batterie:
(b) un manchon thermorétractable recouvrant la paroi latérale de la circonférence externe et la région de bordure externe de l'extrémité de borne comportant la soupape de sécurité d'un élément de batterie;
(c) une plaque d'étanchéité fixée de façon étanche à l'humidité par l'intermédiaire d'une couche adhésive à séparation par pression à un manchon thermorétractable recouvrant la région de bordure externe de l'extrémité de borne comportant la soupape de sécurité, la plaque d'étanchéité comportant un trou de borne de batterie;
(d) une lame de conducteur traversant le trou de la borne de batterie de la plaque d'étanchéité, son extrémité étant connectée à l'extrémité de la borne de batterie comportant la soupape de sécurité; et
(e) un joint adhésif appliqué de façon étanche à l'humidité dans l'espace entre le trou de la borne de batterie de la plaque d'étanchéité et la lame de conducteur.

2. Batterie comportant une structure de prévention de la rouille selon la revendication 1, dans laquelle la couche adhésive à séparation par pression est une bande adhésive double face.

3. Batterie comportant une structure de prévention de la rouille selon la revendication 1, dans laquelle la couche adhésive à séparation par pression est un joint adhésif.

4. Batterie comportant une structure de prévention de la rouille selon la revendication 1, dans laquelle la plaque d'étanchéité est composée de matière plastique en plaque.

5. Batterie comportant une structure de prévention de la rouille selon la revendication 1, dans laquelle une bague est fixée à la plaque d'étanchéité au niveau du trou de la borne de batterie.

6. Batterie comportant une structure de prévention de la rouille selon la revendication 1, dans laquelle:
(a) la lame de conducteur est recouverte d'une couverture tubulaire;
(b) un trou d'insertion du joint adhésif est agencé dans la région d'extrémité de la lame de conducteur débordant de la couverture tubulaire;
(c) le trou d'insertion du joint adhésif est positionné près de la région de soudage de la lame de conducteur qui est soudée à la borne de batterie; et
(d) la surface de la lame de conducteur débordant de la couverture tubulaire est recouverte de façon étanche à l'humidité par un joint adhésif.

7. Batterie comportant une structure de prévention de la rouille selon la revendication 1, dans laquelle la lame de conducteur est un matériau de plaquage composé de cuivre revêtu d'un métal à conductivité électrique inférieure à celle du cuivre.

8. Batterie comportant une structure de prévention de la rouille selon la revendication 7, dans laquelle le métal à conductivité électrique inférieure à celle du cuivre est du nickel

9. Batterie comportant une structure de prévention de la rouille selon la revendication 1, dans laquelle la région d'extrémité de la lame de conducteur est courbée pour fournir une région de soudage, l'angle de courbure de la région de soudage étant un angle obtus.

10. Batterie comportant une structure de prévention de la rouille selon la revendication 1, dans laquelle un trou d'insertion du joint adhésif est agencé dans la région courbée de la lame de conducteur.

11. Batterie comportant une structure de prévention de la rouille selon la revendication 1, dans laquelle la région d'extrémité de la lame de conducteur est divisée en deux, la région d'extrémité étant soudée par points à la borne de batterie.

12. Batterie comportant une structure de prévention de la rouille selon la revendication 1, dans laquelle plusieurs éléments de batterie sont connectés par l'intermédiaire d'une âme en nid d'abeilles, de sorte à former des conduites de refroidissement à air entre les éléments de batterie.

13. Batterie comportant une structure de prévention de la rouille selon la revendication 12, dans laquelle l'âme en nid d'abeilles a la configuration de cylindres hexagonaux connectés.

14. Batterie comportant une structure de prévention de la rouille selon la revendication 12, dans laquelle l'âme en nid d'abeilles est composée d'un matériau en feuille ayant une plasticité et une élasticité suffisantes pour permettre sa déformation.

15. Batterie comportant une structure de prévention de la rouille selon la revendication 1, dans laquelle un carter en plastique est agencé au-dessus des plaques d'étanchéité, ce carter ayant la forme de disques plus grands que le diamètre extérieur d'un élément de batterie, connectés de sorte à former des espaces.

16. Batterie comportant une structure de prévention de la rouille selon la revendication 15, dans laquelle le centre des disques du carter comporte des trous de remplissage du joint adhésif, ces trous de remplissage du joint adhésif comportant des parois de guidage entourant leur bord.

17. Batterie comportant une structure de prévention de la rouille selon la revendication 15, dans laquelle le carter en plastique comporte des tiges de connexion ayant la forme d'une seule pièce dans les espaces entre les disques, le carter, agencé au niveau des deux extrémités des éléments de batterie, étant connecté par l'intermédiaire des tiges de connexion.

18. Batterie comportant une structure de prévention de la rouille selon la revendication 15, dans laquelle le joint adhésif appliqué de façon étanche à l'humidité dans l'espace entre le trou de la borne de la plaque d'étanchéité de la batterie et la lame de conducteur remplit également le trou de remplissage de joint adhésif dans le disque du carter.
